(19) Europäisches Patentamt / European Patent Office / Office européen des brevets

(11) **EP 4 717 747 A1**

(12) **EUROPEAN PATENT APPLICATION**

(43) Date of publication:
01.04.2026 Bulletin 2026/14

(51) International Patent Classification (IPC):
**C09K 5/04** (2006.01)  **F25B 9/00** (2006.01)

(21) Application number: 25163183.4

(52) Cooperative Patent Classification (CPC):
**C09K 5/042; F25B 9/002;** F25B 2400/12

(22) Date of filing: **12.03.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.09.2024 JP 2024171018**

(71) Applicant: **DAIKIN INDUSTRIES, LTD.**
**Osaka-shi, Osaka 530-0001 (JP)**

(72) Inventors:
• **Minamida, Tomoatsu**
**Osaka-Shi, Osaka, 530-0001 (JP)**
• **Kondo, Shigenori**
**Osaka-Shi, Osaka, 530-0001 (JP)**

(74) Representative: **Hoffmann Eitle**
**Patent- und Rechtsanwälte PartmbB**
**Arabellastraße 30**
**81925 München (DE)**

(54) **REFRIGERATION APPARATUS**

(57)   A refrigeration apparatus (1) includes a refrigerant circuit (10), wherein tetrahydrothiophene, as an odor component, is sealed in the refrigerant circuit (10) along with a refrigerant and a refrigerating machine oil, and following Formula (1) is satisfied, where an amount of leakage of the refrigerant that leaks from the refrigerant circuit (10) at a leakage rate of 0.001 kg/h for four minutes is referred to as $M_{leak1}$ [kg], a fill amount of the odor component into the refrigerant circuit (10) is referred to as $M_{od}$ [kg], a fill amount of the refrigerating machine oil is referred to as $M_{oil}$ [kg], solubility of the odor component in the refrigerating machine oil is referred to as $S_{oil}$ [weight ppm], a fill amount of the refrigerant into the refrigerant circuit (10) is referred to as $M_{ref}$ [kg], a volume of a room (LS) is referred to as $V$ [m³], and a density of the odor component is referred to as $\rho$ [kg/m³].

[Formula 1]

$$1 > \frac{M_{leak1} \times \left( (M_{od} - M_{oil} \times S_{oil})/M_{ref} \right)}{0.25 \times V \times \rho} \quad \cdots (1)$$

FIG.1

EP 4 717 747 A1

**Description**

TECHNICAL FIELD

This disclosure relates to refrigeration apparatuses.

BACKGROUND ART

Conventionally, refrigeration apparatuses are known in which a highly flammable refrigerant with a low Global Warming Potential (GWP) value is sealed in a refrigerant circuit. In this type of refrigeration apparatus, it is important to recognize leakage of refrigerant from the refrigerant circuit at an early stage and to avoid combustion of the refrigerant.
Patent Literature (PTL) 1 discloses a refrigeration cycle device in which an odor component, which is a sulfur-based odorant, is sealed in a refrigerant circuit in addition to a refrigerant. When the refrigerant leaks from the refrigerant circuit, the odor component also leaks, so that people around the refrigerant can recognize abnormality and take necessary measures.
Note that, when odor components are added to the refrigerant circuit, there is a challenge in balancing an amount of odor components with respect to whether a leakage of refrigerant reaches or does not reach a flammable range to trigger human recognition of abnormality. For example, when a large amount of odor components is filled in the refrigerant circuit, there is a concern that a person who is sensitive to odor components may recognize a slight leakage of refrigerant and odor components which does not reach the flammable range as abnormality and make inquiries. Conversely, when a small amount of odor components is filled in the refrigerant circuit, there is a concern that a person who is insensitive to odor components may not recognize abnormality even when the amount of refrigerant leakage from the refrigerant circuit reaches the flammable range.
In addition, refrigerating machine oil filled in the refrigerant circuit for lubricating a compressor tends to dissolve odor components more easily than refrigerant. Therefore, even in a relation between odor components and refrigerating machine oil, it has been difficult to determine the amount of odor components to be filled.
The present disclosure provides a technology for enabling to fill the refrigerant circuit with an appropriate amount of odor components.

CITATION LIST

PATENT LITERATURE

[PTL 1] Patent Publication No. 7162786

SUMMARY OF THE INVENTION

A refrigeration apparatus includes a refrigerant circuit, wherein tetrahydrothiophene, as an odor component, is sealed in the refrigerant circuit along with a refrigerant and a refrigerating machine oil, and following Formula (1) is satisfied, where an amount of leakage of the refrigerant that leaks from the refrigerant circuit at a leakage rate of 0.001 kg/h for four minutes is referred to as $M_{leak1}$ [kg], a fill amount of the odor component into the refrigerant circuit is referred to as $M_{od}$ [kg], a fill amount of the refrigerating machine oil is referred to as $M_{oil}$ [kg], solubility of the odor component in the refrigerating machine oil is referred to as $S_{oil}$ [weight ppm], a fill amount of the refrigerant into the refrigerant circuit is referred to as $M_{ref}$ [kg], a volume of a room is referred to as $V$ [m$^3$], and a density of the odor component is referred to as $\rho$ [kg/m$^3$]. The unit of the left term of Formula (1) is [volume ppb].
[Formula 1]

$$1 > \frac{M_{leak1} \times \left( (M_{od} - M_{oil} \times S_{oil})/M_{ref} \right)}{0.25 \times V \times \rho} \quad \cdots (1)$$

According to the above, the refrigeration apparatus can fill the refrigerant circuit with an appropriate amount of odor components by satisfying Formula (1). That is, the refrigeration apparatus can fill the refrigerant circuit with the appropriate fill amount of odor components that does not cause a person who is sensitive to the odor of tetrahydrothiophene, which is an odor component, to detect any abnormality even if a small leak occurs in the refrigerant circuit that is not in a flammable range. This enables the refrigeration apparatus to optimize operation such as reducing a number of inquiries to a service company.
Following Formula (2) is satisfied, where an amount of leakage of the refrigerant that leaks from the refrigerant circuit at a leakage rate of 3 kg/h for four minutes is referred to as $M_{leak2}$ [kg], the fill amount of the odor component into the refrigerant circuit is referred to as $M_{od}$ [kg], the fill amount of the refrigerating machine oil is referred to as $M_{oil}$ [kg], the solubility of the odor component in the refrigerating machine oil is referred to as $S_{oil}$ [weight ppm], the fill amount of the refrigerant into the refrigerant circuit is referred to as $M_{ref}$ [kg], the volume of the room is referred to as V [m$^3$], and the density of the odor component is referred to as $\rho$ [kg/m$^3$]. The unit of the left term of Formula (2) is [volume ppb].
[Formula 2]

$$40 \leqq \frac{M_{leak2} \times \left( (M_{od} - M_{oil} \times S_{oil})/M_{ref} \right)}{0.25 \times V \times \rho} \quad \cdots (2)$$

By satisfying Formula (2) in this way, the refrigerating apparatus can design a fill amount of the odor component that can cause even a person who is insensitive to the odor of tetrahydrothiophene to detect an abnormality when the refrigerant leaks in the refrigerant circuit in the flammable range.

The volume of the room is 56.5 m$^3$ or less when a rated cooling capacity is 2.0 kW or less.

Thus, the fill amount of the odor component can be appropriately designed in the refrigerating apparatus whose rated cooling capacity is 2.0 kW or less.

The volume of the room is 21.8 m$^3$ to 70.6 m$^3$ when a rated cooling capacity is more than 2.0 kW and 2.5 kW or less.

Thus, it is possible to appropriately design the fill amount of odor components in the refrigeration apparatus with the rated cooling capacity exceeding 2.0 kW and that is 2.5 kW or less.

The volume of the room is 27.3 m$^3$ to 98.8 m$^3$ when a rated cooling capacity is more than 2.5 kW and 3.5 kW or less.

Thus, it is possible to appropriately design the fill amount of odor components in the refrigeration apparatus with the rated cooling capacity exceeding 2.5 kW and that is 3.5 kW or less.

The volume of the room is 38.2 m$^3$ to 141.2 m$^3$ when a rated cooling capacity is more than 3.5 kW and 5.0 kW or less.

Thus, it is possible to appropriately design the fill amount of odor components in a refrigeration apparatus with a rated cooling capacity exceeding 3.5 kW but not exceeding 5.0 kW.

The volume V of the room is 54.5 m$^3$ or more when a rated cooling capacity is more than 5.0 kW.

Thus, it is possible to appropriately design the fill amount of odor components in a refrigeration apparatus with a rated cooling capacity exceeding 5.0 kW.

The refrigerant is a hydrocarbon refrigerant.

Thus, the refrigerant can optimize the fill amount of odor components in the refrigerant circuit with a hydrocarbon-based refrigerant.

BRIEF DESCRIPTION OF THE DRAWINGS

FIG. 1 is a drawing schematically illustrating a configuration of an air conditioner according to an embodiment;
FIG. 2A is a table illustrating an indication method of odor intensity;
FIG. 2B is a table illustrating evaluation items of a questionnaire regarding perception of odor components;
FIG. 3 is a drawing schematically illustrating a testing device for an odor sensory test;
FIG. 4A is a graph illustrating a relation between the odor intensity and odor perception;
FIG. 4B is a graph illustrating a relation between diffusive concentration of odor components and the odor intensity;
FIG. 5A is a table illustrating the odor intensity and diffusive concentration for a person who is insensitive to the odor of odor components;
FIG. 5B is a table illustrating the odor intensity and diffusive concentration for a person who is sensitive to the odor of odor components;
FIG. 6 is a drawing illustrating an example of THT concentration distribution when a refrigerant circuit leaks for four minutes at a leakage rate of 3 kg/h from a stationary air conditioner installed in a room; and
FIG. 7 is a table for describing a relation between a rated cooling capacity and a range of volume of room.

DESCRIPTION OF THE PREFERRED EMBODIMENTS

In the following, embodiments of the present invention will be described with reference to the accompanying drawings. In the drawings, the same constituent elements are denoted with the same reference numerals, and redundant description thereabout may be omitted. In addition, in each of the drawings, dimensions, ratios or numbers may be exaggerated or simplified as necessary to facilitate understanding of the invention.

<COMPOSITION OF REFRIGERATION APPARATUS>

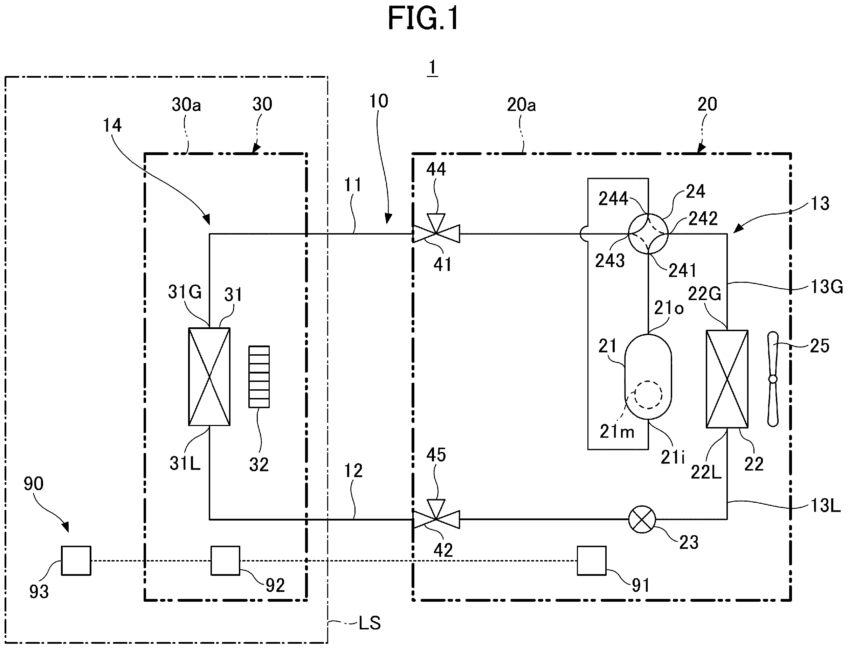

As shown in FIG. 1, a refrigeration apparatus 1 according to the embodiment of the present disclosure is an air conditioner that regulates a temperature of air in a room LS. Hereinafter, the refrigeration apparatus 1 is also referred to as an air conditioner 1. The air conditioner 1 is used for a cooling and a heating operation of the room LS by performing a vapor compression refrigeration cycle operation. In the cooling operation, the air conditioner 1 cools the air of the room LS to adjust the temperature. In the heating operation, the air conditioner 1 heats the air of the room LS to adjust the temperature.

The air conditioner 1 includes a refrigerant circuit 10 containing a refrigerant, an outdoor unit 20 which is a heat source unit installed in the outdoor space, and an indoor unit 30 which is a unit for use installed in the room LS. The refrigerant circuit 10 performs a cooling operation and a heating operation by circulating the refrigerant between the outdoor unit 20 and the indoor unit 30. The air conditioner 1 according to the embodiment is a pair type in which one outdoor unit 20 and the indoor unit 30 are connected. However, the air conditioner 1 may have a configuration in which one outdoor unit 20 and a plurality of indoor units 30 are connected, or a configuration in which a plurality of outdoor units 20 and one indoor unit 30 are connected.

The refrigerant circuit 10 includes a first connection pipe 11 and a second connection pipe 12 for connecting the outdoor unit 20 and the indoor unit 30. The first connection pipe 11 and the second connection pipe 12 connect the room LS with the outdoor space to circulate refrigerant. The first connection pipe 11 is one or more gas pipes for circulating gaseous refrigerant. The second connection pipe 12 is one or more liquid pipes for circulating liquid refrigerant.

The refrigerant circuit 10 has an outdoor path 13 connected to one end of the first connection pipe 11 and one end of the second connection pipe 12, respectively, inside the outdoor unit 20. Furthermore, the refrigerant circuit 10 has an indoor path 14 connected to the other end of the first connection pipe 11 and the other end of the second connection pipe 12, respectively, inside the indoor unit 30. The refrigerant circuit 10 has an endless circulation circuit formed by the first connection pipe 11, the second connection pipe 12, the outdoor path 13, and the indoor path 14.

<OUTDOOR UNIT>

The outdoor unit 20 is a portion of the refrigerant circuit 10 by providing with the outdoor path 13 inside a housing 20a. The outdoor unit 20 includes a compressor 21, an outdoor heat exchanger 22, an expansion valve 23, a four-way switching valve 24, and an outdoor fan 25. The compressor 21, the outdoor heat exchanger 22, the expansion valve 23, and the four-way switching valve 24 are connected to the outdoor path 13 of the outdoor unit 20.

In the refrigeration cycle operation, the compressor 21 compresses a low-pressure refrigerant sucked from a suction connection end 21i to increase its pressure, and discharges a high-pressure refrigerant from a discharge connection end 21o. As the compressor 21, for example, a rotary device can be used to increase the pressure of the refrigerant by rotationally driving a sealed compression element by a compressor motor 21m. The suction connection end 21i and the discharge connection end 21o of the compressor 21 are connected to the four-way switching valve 24 through the outdoor path 13.

The outdoor heat exchanger 22 is a heat source-side heat exchanger (condenser) that radiates the heat of the refrigerant by performing heat exchange between the refrigerant circulating inside and the outdoor air in the refrigeration cycle operation during a cooling operation. As the outdoor heat exchanger 22, for example, a fin-and-tube mechanism can be used. A gas connection end 22G of the outdoor heat exchanger 22 is connected to the four-way switching valve 24 through the outdoor path 13. A liquid connection end 22L of the outdoor heat exchanger 22 is connected to the expansion valve 23 through the outdoor path 13.

The outdoor fan 25 blows outdoor air to the outdoor heat exchanger 22. As the outdoor fan 25, for example, a propeller fan having a motor (not shown) and a propeller can be used.

The expansion valve 23 is a pressure reducing device for reducing the refrigerant flowing through the outdoor path 13 to a low temperature. As the expansion valve 23, an electronic valve or a temperature-sensitive valve for adjusting an opening of an internal flow path can be used. The expansion valve 23 may be provided in the indoor unit 30.

The four-way switching valve 24 reverses a flow of the refrigerant in the refrigerant circuit 10 forward and backward in order to selectively perform cooling and heating operations. The four-way switching valve 24 can be switched between the first state indicated by solid lines in FIG. 1 and the second state indicated by broken lines in FIG. 1.

The four-way switching valve 24 is provided with a first port 241, a second port 242, a third port 243, and a fourth port 244 to which a plurality of pipes included in the refrigerant circuit 10 can be connected. The discharge connection end 21o of the compressor 21 is connected to the first port 241 of the four-way switching valve 24 via a pipe of the outdoor path 13. The gas connection end 22G of the outdoor heat exchanger 22 is connected to the second port 242 of the four-way switching valve 24 via a pipe of the outdoor path 13. The pipe of the outdoor path 13 connected to the first connection pipe 11 is connected to the third port 243 of the four-way switching valve 24. The third port 243 is connected to the gas connection end 31G of the indoor heat exchanger 31 via the first connection pipe 11. The suction connection end 21i of the compressor 21 is connected to the fourth port 244 of the four-way switching valve 24 via a pipe of the outdoor path 13.

As shown by the solid lines in FIG. 1, the four-way switching valve 24 can form a first state in which the first port 241 and the second port 242 communicate with each other and the third port 243 and the fourth port 244 communicate with each other. Thus, in the first state, the four-way switching valve 24 communicates with the discharge connection end 21o of the compressor 21 and the gas connection end 22G of the outdoor heat exchanger 22, and communicates with the suction connection end 21i of the compressor 21 and an external first connection pipe 11 of the outdoor unit 20. In this first state, refrigerant flows from the first connection pipe 11 to the outdoor path 13 of the outdoor unit 20 based on drive of the compressor 21. The refrigerant is compressed by the compressor 21, becomes high pressure, and moves to the outdoor heat exchanger 22 through the four-way switching valve 24. The refrigerant releases heat in the outdoor heat exchanger 22, then becomes a low-pressure, low-temperature liquid through decompression by the expansion valve 23, and moves to the second connection pipe 12. That is, the air conditioner 1 can perform cooling operation by drawing a high-temperature refrigerant through the first connection pipe 11 and sending a low-temperature refrigerant to the indoor unit 30 through the second connection pipe 12.

In addition, the four-way switching valve 24 can form a second state in which the first port 241 and the third port 243 communicate, and the second port 242 and the fourth port 244 communicate, as shown by the broken lines in FIG. 1. Thus, in the second state, the four-way switching valve 24 communicates the discharge connection end 21o of the compressor 21 with the external first connection pipe 11 of the outdoor unit 20, and communicates the suction connection end 21i of the compressor 21 with the gas connection end 22G of the outdoor heat exchanger 22. In this second state, refrigerant flows from the second connection pipe 12 to the outdoor path 13 of the outdoor unit 20 based on the drive of the compressor 21. The refrigerant moves through the expansion valve 23 to the outdoor heat exchanger 22, and then from the outdoor heat exchanger 22 to the compressor 21. The refrigerant is compressed in the compressor 21, becomes a high-pressure, high-temperature gas, and moves to the first connection pipe 11 through the four-way switching valve 24. That is, the air conditioner 1 can perform heating operation by drawing a low-temperature refrigerant through the second connection pipe 12 and sending a high-temperature refrigerant to the indoor unit 30 through the first connection pipe 11.

The outdoor path 13 of the outdoor unit 20 can be divided into a gas line 13G that mainly circulates gaseous refrigerant and a liquid line 13L that mainly circulates liquid refrigerant. The gas line 13G refers to a path that connects a connection point with the first connection pipe 11 to the compressor 21 and the gas connection end 22G of the outdoor heat exchanger 22. The liquid line 13L refers to a path that connects a connection point with the second connection pipe 12 to the expansion valve 23 and the liquid connection end 22L of the outdoor heat exchanger 22.

A first closing valve 41 is provided at the connection between the gas line 13G and the first connection pipe 11. The first closing valve 41 opens and closes the flow path of the gas line 13G based on an operation of an operator. A second closing valve 42 is provided at the connection between the liquid line 13L and the second connection pipe 12. The second closing valve 42 opens and closes the flow path of the liquid line 13L based on the operation of the operator.

The first closing valve 41 has a gas service port 44. The second closing valve 42 has a liquid service port 45. The gas service port 44 is larger than the liquid service port 45. The gas service port 44 and the liquid service port 45 are used to fill the refrigerant circuit 10 of the air conditioner 1 with refrigerant, to discharge the refrigerant from the outdoor unit 20, to measure the pressure of the refrigerant in the refrigerant circuit 10, and so on.

<INDOOR UNIT>

Additionally, the indoor unit 30 is installed in the room LS. The indoor unit 30 is a portion of the refrigerant circuit 10 by providing the indoor path 14 inside the housing 30a. The indoor unit 30 includes an indoor heat exchanger 31 and an indoor fan 32. An indoor heat exchanger 31 is connected to the indoor path 14 of the indoor unit 30.

The indoor heat exchanger 31 is a user-side heat exchanger (evaporator) that exchanges heat between the indoor air and the refrigerant circulating inside during refrigeration cycle operation. Thus, the indoor heat exchanger 31 can take heat from the indoor air and cool it when the refrigerant is lower than the indoor air, while it can release heat to the indoor air and warm it when the refrigerant is higher than the indoor air. As the indoor heat exchanger 31, for example, a fin-and-tube type mechanism can be applied. The gas connection end 31G of the indoor heat exchanger 31 is connected to the first connection pipe 11 through the indoor path 14. The liquid connection end 31L of the indoor heat exchanger 31 is connected to the second connection pipe 12 through the indoor path 14.

The indoor fan 32 blows indoor air to the indoor heat exchanger 31. The indoor fan 32 is, for example, a cross flow fan having a motor (not shown) and a cylindrical impeller. The indoor air conveyed by the indoor fan 32 passes through the indoor heat exchanger 31 and is blown from the indoor heat exchanger 31 to the room LS.

The indoor unit 30 has a power supply circuit connected to a commercial power supply. The air conditioner 1 operates the indoor unit 30 based on supply of power from the commercial power supply and also operates the outdoor unit 20 via a power line (not shown).

<CONTROL UNIT OF AIR CONDITIONER>

The air conditioner 1 has a control unit 90 that controls the operation of each configuration. The control unit 90 includes a first control device 91, a second control device 92, and a remote controller 93. The remote controller 93 is a device in which a person (user) operates various instructions to the air conditioner 1, and may be a dedicated controller or a portable terminal such as a smartphone or tablet.

Each of the first control device 91, the second control device 92, and the remote controller 93 is a computer (more specifically, an MCU: Micro Control Unit) having a processor, a memory, an input/output interface, and a communication interface. The processor is a combination of one or more of a CPU (Central Processing Unit), a GPU (Graphics Processing Unit), an ASIC (Application Specific Integrated Circuit), an FPGA (Field-Programmable Gate Array), and a circuit including a plurality of discrete semiconductors. The memory includes a non-volatile memory and a volatile memory. The memory stores programs for controlling various processes, and the processor controls various operations by reading and executing the programs stored in the memory.

The first control device 91 is provided in the outdoor unit 20 and controls each of configurations of the outdoor unit 20. The second control device 92 is provided in the indoor unit 30 and controls the configurations of the indoor unit 30. The first control device 91 and the second control device 92 can transmit and receive information to each other by wire communication or wireless communication. The second control device 92 and the remote controller 93 can transmit and receive information to each other by wire communication or wireless communication. The control unit 90 selectively executes cooling operation and heating operation according to an operation command of the remote controller 93 by a person (user).

<REFRIGERANT>

It is preferable that the refrigerant sealed in the refrigerant circuit 10 has a GWP value as low as possible and has a small load on the environment. As a material of this kind of refrigerant, for example, refrigerants mainly composed of hydrocarbons having one to four carbon atoms (hydrocarbons) such as R290 (propane), R1270 (propylene), R600a (isobutane) can be given. Materials of these refrigerants are highly flammable refrigerants having higher combustibility than hydrofluorocarbon. In the present embodiment, a case where propane is applied as the refrigerant will be described. The refrigerant may also be methane (R50), ethane (R170), butane (R600), ammonia (R717), or the like.

<ODOR COMPONENT>

As described above, odor components are sealed together with the refrigerant in the air conditioner 1 in order for a person to recognize leakage of the highly flammable refrigerant from the refrigerant circuit 10. As the odor component, for example, tetrahydrothiophene (THT) which is a sulfur-based odorant is a sulfur-based compound. Hereinafter, tetrahydrothiophene is sometimes referred to as THT.

<REFRIGERATING MACHINE OIL>

The air conditioner 1 seals refrigerating machine oil in the refrigerant circuit 10 together with refrigerant and THT. The refrigerating machine oil is stored in the refrigerant circuit 10 mainly at the bottom of the compressor 21, and circulated to the compression element in the compressor 21 to maintain lubricity of a sliding unit. A portion of the refrigerating machine oil circulates in the refrigerant circuit 10 together with refrigerant and THT. In other words, the refrigerating machine oil is mixed with refrigerant and THT to be used as a working fluid for the refrigeration apparatus. A content ratio of the refrigerating machine oil to a total amount of the working fluid for the refrigeration apparatus is preferably 10wt% to 70wt%, and more preferably 20wt% to 60wt%.

Examples of refrigerating machine oils include oxygenated synthetic oils (ester refrigerating machine oil, ether refrigerating machine oil, polyalkylene glycol oil, etc.) and hydrocarbon-based refrigerating machine oils. Among them, polyalkylene glycol oil (PAG oil) is preferable as a hydrocarbon refrigerant from a viewpoint of compatibility. One refrigerating machine oil may be used alone or two or more refrigerating machine oils may be used in combination.

<DESIGN OF FILL AMOUNT OF ODOR COMPONENTS>

In the air conditioner 1 constructed as described above, the refrigerant and odor components are filled and sealed in the refrigerant circuit 10 during manufacturing at a factory, or the refrigerant and odor components are filled and sealed in the refrigerant circuit 10 by the operator after installation of the air conditioner, enabling cooling operation and heating operations. As described above, there is a problem that it is difficult to balance the fill amount of odor components between the amount of odor components that are not desired for a person to identify an abnormality because the leakage amount of refrigerant does not reach a flammable range and the amount of odor components that are desired for a person to recognize an abnormality because the leakage amount of refrigerant reaches the flammable range.

Therefore, in the air conditioner 1 according to the embodiment, the fill amount of odor components (THT) is calculated using the following Formulae (1) and (2), and THT of the calculated fill amount is filled in the refrigerant circuit 10. Formulae (1) and (2) for setting the fill amount of THT will be described below.

[Formula 1]

$$1 > \frac{M_{leak1} \times \left( (M_{od} - M_{oil} \times S_{oil})/M_{ref} \right)}{0.25 \times V \times \rho} \quad \cdots (1)$$

[Formula 2]

$$40 \leqq \frac{M_{leak2} \times \left( (M_{od} - M_{oil} \times S_{oil})/M_{ref} \right)}{0.25 \times V \times \rho} \quad \cdots (2)$$

Formula (1) is a function for calculating the fill amount of THT that does not cause a person who is sensitive to the odor of THT, which is an odor component, to detect any abnormality. The value in the left term of Formula (1) indicates a diffusive concentration [volume ppb] of THT, and is a value calculated based on the diffusive concentration setting method described below.

$M_{leak1}$ in Formula (1) is a constant indicating the amount of refrigerant leakage when refrigerant and THT leak for a long period of time (minor leakage, slow leak) in the room LS. In the case of minor leakage of refrigerant, an entire amount of refrigerant will eventually leak out, but it will eventually disappear by ventilation of the living room. In the case of minor leakage of refrigerant, there is a sufficient margin with respect to flammable range generation. Therefore, when minor leakage of refrigerant is assumed, it is recommended to set the value so that a person who is sensitive to the odor of THT will not sense the odor component. Here, a typical cause of minor leakage of refrigerant in the room LS is ant nest corrosion of a tube of the indoor heat exchanger 31. It is known that ant nest corrosion of the indoor heat exchanger 31 has a leakage rate of about 0.001 kg/h.

In addition, the IEC standard (IEC60335-2-40), which is a regulation of "Specification for safety of household and similar electrical appliances", regulates the leakage amount of refrigerant assuming the generation of a flammable range, and the leakage rate is on the condition that the entire amount of refrigerant leaks for four minutes. Therefore, $M_{leak1}$ is recommended to be set to the amount [kg] of refrigerant that leaks from the refrigerant circuit 10 for four minutes at the leakage rate of 0.001 kg/h. The actual leakage amount of refrigerant that leaks in four minutes due to ant nest corrosion is 0.0000667 kg.

$M_{od}$ in Formula (1) is a variable (parameter) indicating the fill amount [kg] of odor component (THT) in the refrigerant circuit 10. The fill amount of THT in the refrigerant circuit 10 is finally calculated by this $M_{od}$.

$M_{oil}$ in Formula (1) is a variable indicating the fill amount [kg] of refrigerating machine oil in the refrigerant circuit 10. $S_{oil}$ is a variable indicating the solubility [weight ppm] of THT in refrigerating machine oil. The solubility indicates the amount of THT dissolved in a predetermined amount (e.g., 100 g) of refrigerating machine oil. In other words, one portion of THT filled in the refrigerant circuit 10 is dissolved in the refrigerating machine oil, while the other portion of THT is vaporized, or dissolved in the refrigerant. The solubility $S_{oil}$ varies depending on a type of refrigerating machine oil. $M_{oil} \times S_{oil}$ in Formula (1) corresponds to the amount of THT dissolved in the refrigerating machine oil.

$M_{ref}$ in Formula (1) is a variable indicating the fill amount [kg] of refrigerant in the refrigerant circuit 10. According to the above-mentioned IEC standard (IEC60335-2-40), the maximum fill amount of refrigerant in a household refrigeration apparatus 1 is approximately 1 kg when a refrigerant (propane (R290)) is applied. Therefore, the fill amount $M_{ref}$ is set to the maximum amount of 1 kg.

In other words, a term $(M_{od} - M_{oil} \times S_{oil}) / M_{ref}$ in Formula (1) is obtained by dividing the amount of THT after subtracting the amount of THT dissolved in the refrigerating machine oil by the fill amount of refrigerant in $M_{ref}$. In other words, this term represents the concentration of odorant included in a leakage of refrigerant and THT.

V in Formula (1) is a variable indicating the volume [m³] of the room LS corresponding to the rated cooling capacity set for each model of the air conditioner 1. The relation between the rated cooling capacity and the volume of the room LS will be described later in detail.

$\rho$ in Formula (1) is the gas density of the odor component [kg/m³], which is determined by the type and composition of the odor component. When the odor component is THT, the density $\rho$ is 3.66 [kg/m³].

The density of THT is approximately three times higher than the density of air 1.29 [kg/m³] and about two times higher than the density of refrigerant 1.85 [kg/m³]

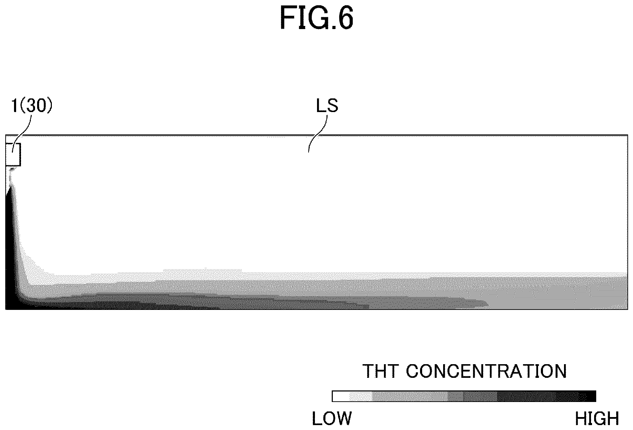

(R290). When the air conditioner 1 is stopped, the air blower in the air conditioner 1 does not agitate the air of the room as in operation. In other words, especially when the air conditioner 1 is stopped, since the THT flowing into the room together with the leaked refrigerant is harder to diffuse than the refrigerant and heavier than the air, it can be assumed that stagnation toward the lower portion of the room continues for a long time. FIG. 6 shows results of CFD analysis of the THT concentration distribution four minutes after the start of refrigerant leakage from the air conditioner 1 (indoor unit 30) installed in the room while it is stopped. In FIG. 6, the lighter the gradient color, the lower the concentration of THT; conversely, the darker the gradient color, the higher the concentration of THT.

According to FIG. 6, the stagnation of the THT concentration is observed at the lower portion of the room, and a boundary layer of the stagnation is found at approximately a quarter of the room height. Although people usually do day-to-day activities sitting on a floor or a chair in a room, or lie on bedding, at the height of the stagnation, they are in a position where they can sense odors. In addition, even while standing, their actions can create an auxiliary diffusion effect to help disperse the stagnated odors. Therefore, V is multiplied by a factor of 0.25 to calculate the appropriate concentration at the volume of a quarter of the height of the room.

Conversely, Formula (2) is a function for calculating the fill amount of THT that can make people who are insensitive to the odor of THT, which is an odor component, detect an abnormality and urge evacuation. The value in the left term of Formula (2) shows the diffusive concentration [volume ppb] as in Formula (1), and is calculated based on the diffusive concentration setting method described below.

$M_{leak2}$ in Formula (2) is a constant indicating the amount of refrigerant leakage in the room LS where refrigerant and THT leak in a short time. If refrigerant leaks in a short time, the value is recommended to be set so that even people who are insensitive to the odor of THT detect an abnormality by THT before the flammable range is generated and urge evacuation. As described above, the regulation of IEC standard (IEC60335-2-40) requires a total leakage of four minutes. If a flammable range is generated by this total leakage of four minutes, a ventilation effect cannot be expected. When the flammable range is widely formed on the floor, the leakage rate is 3 kg/h or more. Therefore, $M_{leak2}$ is recommended to be set to the amount [kg] of refrigerant that leaks from the refrigerant circuit 10 for four minutes at the leakage rate of 3 kg/h. In this case, the amount of leakage is 0.2 kg.

$M_{od}$, $M_{oil}$, $S_{oil}$, $M_{ref}$, V, and $\rho$ in Formula (2) are constants or variables similar to those in Formula (1).

Based on the above, in Formula (1), it is possible to calculate the fill amount of THT that does not cause a claim or the like because a person who is sensitive to the odor of THT does not detect any abnormality when a small amount of THT leaks. In Formula (2), it is possible to calculate the fill amount of THT such that a person who is insensitive to the odor of THT detects any abnormality when a large amount of THT leaks and can urge an evacuation action.

In Formula (1) and Formula (2), the fill amounts of refrigerant $M_{leak1}$ and $M_{leak2}$ leaking from the refrigerant circuit 10 are different. Therefore, it is possible to calculate the range of the fill amount $M_{od}$ of THT that satisfies both Formulae (1) and (2). A designer who fills and seals the refrigerant and THT in the refrigerant circuit during manufacturing at the factory or an operator who fills the refrigerant and THT after installing the equipment adjusts the fill amount of THT so as to be within the range of the fill amount $M_{od}$ of THT derived from Formulae (1) and (2), and fills the refrigerant circuit 10 with THT. Thus, the air conditioner 1 can suppress the possibility of a person who is sensitive to the odor of THT detecting an abnormality when a slight leakage of refrigerant that does not fall into the flammable range occurs from the refrigerant circuit 10. Conversely, the air conditioner 1 can make even a person who is insensitive to the odor of THT detect an abnormality when a leakage of refrigerant that falls into the flammable range occurs from the refrigerant circuit 10 and urge an evacuation action.

<DIFFUSIVE CONCENTRATION OF ODOR COMPONENTS>

Next, a method of setting the value of diffusive concentration [volume ppb] set in the left term of Formulae (1) and (2) above will be described. The value of diffusive concentration is determined by the odor sensory test described below.

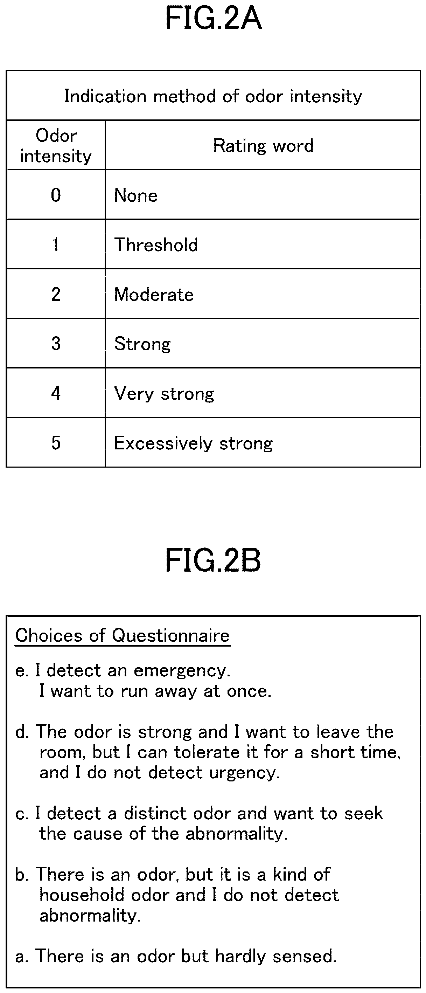

First, a relation between a component concentration and an odor intensity of tetrahydrothiophene (THT), which is an odor component, is found according to the relation between the concentration of 48 components of offensive odor substances and odor intensity (Research Report commissioned by the Environment Agency, March 1980). An odor intensity is a sensory test in which odors are quantified by focusing on strength of odors. In Japan, "Indication method of odor intensity" shown in FIG. 2A is widely used. According to Air and Living Environment Division, Environmental Management Bureau, Ministry of the Environment, Japan, 2002 "Odor Control Administrative Guidebook", in the indication method of odor intensity, "none" is defined as 0, "threshold" as 1, "moderate" as 2, "strong" as 3, "very strong" as 4, and "excessively strong" as 5.

In addition, the "Olfactory Measurement Method Manual" supervised by the Ministry of the Environment describes that a sampling method in accordance with the odor index measurement in the "odor intensity survey method" that is performed by a supervisor and at least six judges (panel), and a judging method and calculation method of the judges. However, in a judgment by approximately six judges, the values are not stable and reproducibility cannot be obtained. Therefore, the "Olfactory Measurement Method Manual for Indoor Odors" published by the Architectural Institute of Japan states that the measured value should be to one decimal place of an average value of data (n = 18 or more) judged three times by six or more judges. In addition, it is stated that the judgment by the judges is preferably by an entrance method, but if the entrance method is difficult, the judges will judge by smelling the odor prepared in the "odor bag".

Therefore, in the odor sensory test, the odor intensity is considered to be a scoring method in a general sensory test, and categories shown in the table in FIG. 2A, with no odor as 0 and the maximum as 5, are made to recognize to multiple judges that they are equally spaced scales on the questionnaire. However, in the questionnaire, confusing expressions such as "able to detect what odor it is" are avoided. A target number of judges is 18 or more. For the scale of judgment, a trimmed mean value obtained by cutting the maximum and minimum is calculated, and a reported value is rounded to 0.1 increments.

In addition to the odor intensity, in the odor sensory test, as shown in FIG. 2B, responses to a questionnaire regarding the perception of THT odor were also required. In the questionnaire, "There is an odor but hardly sensed." is a, "There is an odor, but it is a kind of household odor and I do not think it is abnormal." is b, "I detect a distinct odor and want to seek the cause of the abnormality." is c, "The odor is strong and I want to leave the room, but I can tolerate it for a short time, and I do not detect urgency." is d, and "I detect an emergency. I want to run away at once." is e.

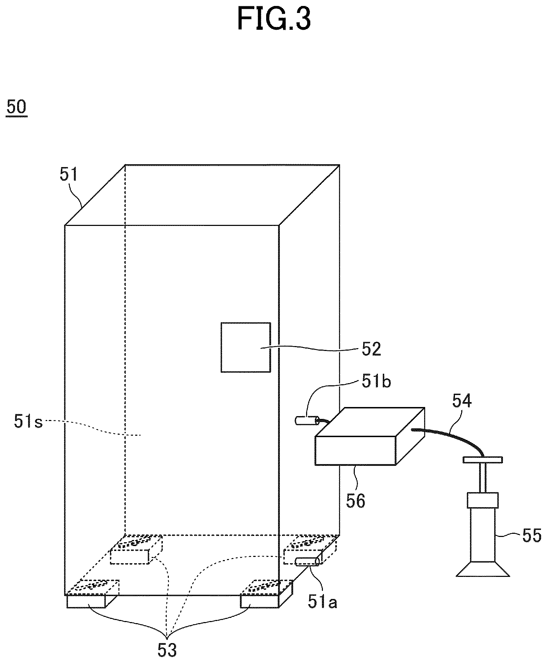

Depending on the odor component, the results may differ between a pattern in which the judgment is made by smelling the gas whose concentration is prepared in a bag, that is, detecting it only with their nose, and a pattern in which the judgment is made by detecting the gas with their whole face. In the present odor sensory test, the latter pattern was adopted instead of the former bag method, and each judge placed their eyes and nose (face) on an open portion of a chamber to judge the odor of THT. Specifically, the testing device 50 as shown in FIG. 3 is used.

The testing device 50 uses a rectangular parallelepiped chamber 51 which is short in the horizontal direction (width and depth) and long in the vertical direction (height direction). Inside the chamber 51 is a space 51s filled with THT. In addition, the chamber 51 is provided with an opening and closing window 52 on one of the four lateral surfaces extending in the vertical direction, and the window 52 is opened so that a judge can smell the space 51s in the chamber 51 by bringing his or her face close.

Furthermore, the testing device 50 is provided with a plurality of stirring devices 53 at the bottom of the chamber 51. Each stirring device 53 is provided with a propeller in the space 51s of the chamber 51, for example, and agitates the gas filled in the space 51s by rotating the propeller at an appropriate rotational speed.

Furthermore, the chamber 51 has a filling port 51a for filling the space 51s with gas (including THT) and an extraction port 51b for extracting the gas filled in the space 51s. The filling port 51a is provided near the bottom of the chamber 51. The extraction port 51b is provided at an approximately intermediate position in the vertical direction of the chamber 51. One end of a tube capable of filling the gas is connected to the filling port 51a. To the other end of the tube is connected a bag into which gases such as THT and refrigerant are injected, and gases such as THT and refrigerant are injected from this bag.

In addition, a sampling bag is placed inside a depressurization box 56, and the extraction port 51b is connected to the mouth of the sampling bag through the depressurization box 56. To the other end of the depressurization box 56 is connected a hose 54 for removing air from the inside of the depressurization box 56, and to the other end of the hose 54 is connected the suction pump 55. By operating the suction pump 55 to depressurize the inside of the depressurization box 56, the sampling bag absorbs the gas in the space 51s of the chamber and expands.

The testing device 50 is basically constructed as described above, and the method of the odor sensory test using the testing device 50 will be described below. In the odor sensory test, the chamber 51 is prepared, and a tube is connected to the filling port 51a, and the depressurization box 56 containing the pre-vacuumed sample collection bag, the hose 54 and the suction pump 55 are connected to the extraction port 51b (Step 1).

In the odor sensory test, 10 µL or 100 µL of THT is injected into the bag, and the THT gas is prepared by standing and vaporizing at 60°C (Step 2).

While operating the stirring device 53 and stirring the space 51s of the chamber 51, the gas of THT is supplied from the filling port 51a to prepare the initial concentration so that the odor intensity is approximately 1.5 to 2 (Step 3). For example, THT is supplied and the space 51s is stirred by the stirring device 53. Then, the stirring device 53 is stopped (left standing) for 5 minutes to check the odor of the space 51s. After confirming the odor, the process of preparing and filling the THT again is repeated as necessary.

Then, in the odor sensory test, the driving of the stirring device 53 is stopped, the window 52 is opened each time, and the plurality of judges (e.g., 18 to 22 persons) judge the odor intensity (Step 4). After confirming the odor, the judge records degree of odor detected in the questionnaire.

In the odor sensory test, after each judge finishes judging, the concentration of THT to be filled in the space 51s of the chamber 51 is increased, and the same adjustment and judgment as described above are repeated in Step 3. For example, the stirring device 53 is operated, and THT is added so that the concentration of THT in the space 51s becomes about three times the concentration, and it is left for five minutes or more. After this adjustment, the odor intensity is judged again by a plurality of judges. The above odor sensory test ends, for example, when the judgment result of the odor intensity by the judges exceeds four.

In the odor sensory test, after the concentration adjustment, the gas in the space 51s is extracted from the extraction port 51b into the sampling bag by operating the suction pump 55 to depressurize the inside of the depressurization box 56 before and after the judgment by the judges, and the gas in the space 51s is analyzed by an analyzer (not shown). The analyzer measures the concentration of THT contained in the gas extracted from the space 51s.

When the results of the questionnaire obtained by the above odor sensory test were examined, it was found that the dispersion of the questionnaire by the judges was very large regarding the odor intensity of THT and the perception of THT. However, when the dispersion was analyzed in detail, it was found that the coefficient of determination $R^2$ in the normal probability plot was approximately 0.9 or more, and that there was generally normality. Therefore, the results of the questionnaire for THT in the odor sensory test were analyzed by assuming that they followed the normal distribution.

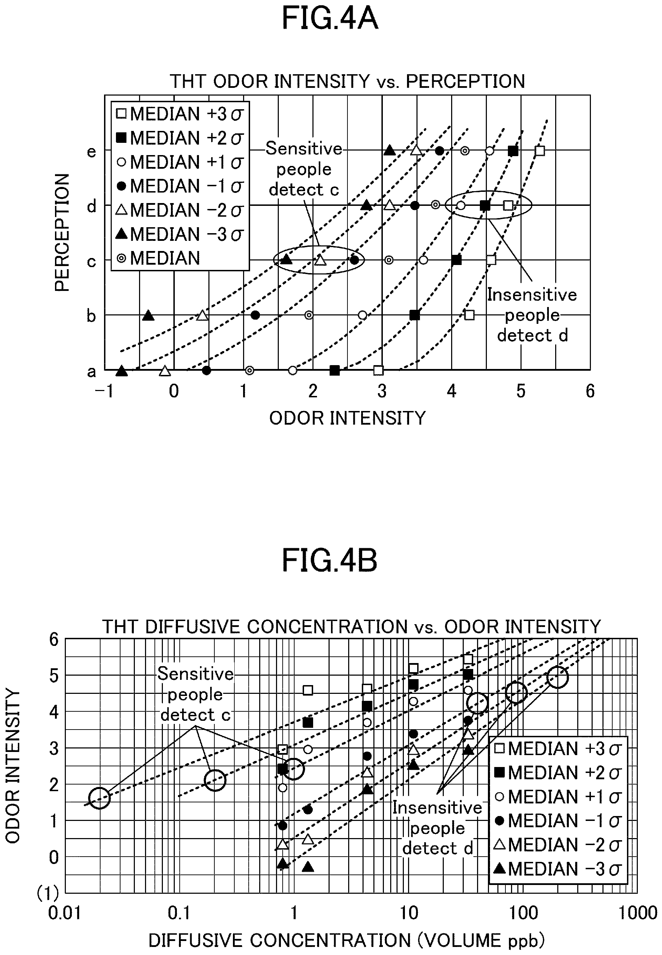

FIG. 4A is a graph illustrating a relation between an odor intensity and perception of THT. FIG. 4B is a graph illustrating a relation between diffusive concentration of THT and the odor intensity. The graph in FIG. 4A shows the median, $+\sigma$ to $+3\sigma$, and $-\sigma$ to $-3\sigma$ of the standard deviation calculated based on the result of the questionnaire on odor perception of the judge and the relation between odor intensity. In the graph, the median is indicated by a double circle. $+\sigma$ to $+3\sigma$ indicate the spread of the normal distribution on the higher odor intensity side relative to the median. $+\sigma$ is a blank circle in both graphs, $+2\sigma$ is a black square in both graphs, and $+3\sigma$ is a blank square in both graphs. In other words, $+\sigma$ to $+3\sigma$ correspond to the normal distribution of insensitive people who cannot sense odor even if odor intensity is high. Conversely, $-\sigma$ to $-3\sigma$ indicate the spread of the normal distribution on the lower odor intensity side relative to the median. $-\sigma$ is a black circle in both graphs, $-2\sigma$ is a blank triangle in both graphs, and $-3\sigma$ is a black triangle in both graphs. In other words, $-\sigma$ to $-3\sigma$ correspond to the normal distribution of sensitive people who can sense odor even if odor intensity is low.

As shown in FIG. 4A, in the sensory evaluation of THT by questionnaire, the odor intensity does not coincide with the perception, and there is a large variation in individual differences. However, it can be said that even people who are insensitive to THT tend to choose d, or "The odor is strong and I want to leave the room, but I can tolerate it for a short time, and I do not detect urgency." of the questionnaire if the odor intensity is 4 or more. Conversely, it can be said that even people who are sensitive to THT tend to choose c, or "I detect a distinct odor and want to seek the cause of the abnormality." of the questionnaire if the odor intensity is 3 or less.

In addition, as shown in FIG. 4B, the normal distribution of THT diffusive concentration [volume ppb] and odor intensity shows that the diffusive concentration regresses linearly as the odor intensity of THT increases. For example, the diffusive concentration between $-\sigma$ and $-3\sigma$ is lower than that between $+\sigma$ and $+3\sigma$, but the diffusive concentration increases linearly as the odor intensity of THT increases.

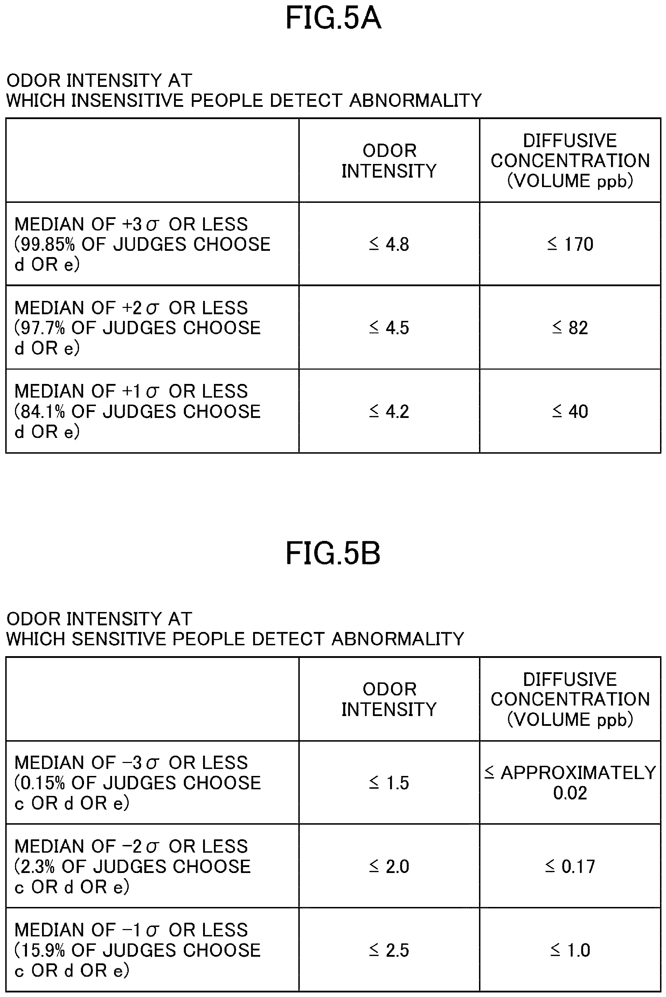

Here, as the perception in which people who are insensitive to THT take evacuation action, there are d, or "The odor is strong and I want to leave the room, but I can tolerate it for a short time, and I do not detect urgency." and e, or "I detect an emergency. I want to run away at once." in the perception questionnaire. This is because even people who are insensitive to THT are urged to leave the room by knowing that the odor of the room LS is strong. Here, a desirable assumption in a scene of evacuation action is to take necessary measures and evacuate safely. In other words, if the odor is abnormal, a desire to open the window and ventilate is inevitable. That is, taking such measures will eliminate the flammable range generated, thereby eliminating a risk of a subsequent ignition explosion. In addition, a psychological respite is necessary to evacuate safely without too much panic among a wide range of age groups. Based on these facts, substantial evacuation action can be expected from perception d. The table shown in FIG. 5A is extracted for the normal distribution in which people who are insensitive to THT select the perception d. The median $+1\sigma$ or less is the value at which 84.1% of judges choose the perception d or e, the median $+2\sigma$ or less is the value at which 97.7% of judges choose the perception d or e, and the median $+3\sigma$ or less is the value at which 99.85% of judges choose the perception d or e.

Referring to FIGS. 4A and 4B, the odor intensity in the range of the median $+1\sigma$ or less is 4.2 or less, and the diffusive concentration corresponding to this odor intensity is 40 [volume ppb] or less. The odor intensity in the range of the median $+2\sigma$ or less is 4.5 or less, and the diffusive concentration corresponding to this odor intensity is 82 [volume ppb] or less. The odor intensity in the range of the median $+3\sigma$ or less is 4.8 or less, and the diffusive concentration corresponding to this odor intensity is 170 [volume ppb] or less.

Conversely, the perception that THT-sensitive people do not recognize abnormality is considered to be located between b, or "There is an odor, but it is a kind of household odor and I do not think it is abnormal." and c, or "I detect a distinct odor and want to seek the cause of the abnormality." in the perception questionnaire. The table in FIG. 5B shows the normal distribution where THT-sensitive people select the perception c. The median of $-1\sigma$ or less is the value at which 15.9% of the judges choose the perception c, d, or e. The median of $-2\sigma$ or less is the value at which 2.3% of the judges choose the perception c, d, or e. The median of $-3\sigma$ or less is the value at which 0.15% of the judges choose the perception c, d, or e.

Referring to FIGS. 4A and 4B, the odor intensity in the range of $-1\sigma$ or less is 2.5 or less, and the diffusive concentration corresponding to this odor intensity is 1 [volume ppb] or less. The odor intensity in the range of $-2\sigma$ or less is 2.0 or less, and the diffusive concentration corresponding to this odor intensity is 0.17 [volume ppb] or less. The odor intensity in the range of $-3\sigma$ or less is 1.5 or less, and the diffusive concentration corresponding to this odor intensity is about 0.02 [volume ppb] or less.

If the design assumes a 1/10 failure probability for evacuation by THT, it can be said that the normal distribution relative to the median may be within $\pm 1\sigma$, and it would be better if it were within $\pm 2\sigma$. Therefore, the diffusive concentration of THT that can urge the insensitive person to evacuate is preferably 40 [volume ppb] or more, and more preferably 82 [volume ppb] or more. The diffusive concentration of THT that does not cause the sensitive person to recognize abnormality is preferably less than 1.0 [volume ppb], and more preferably less than 0.17 [volume ppb].

Based on the results of the above odor sensory test, the value of the left term in Formula (1) can be set to 1.0, and the value of the left term in Formula (2) can be set to 40. In other words, the diffusive concentration [volume ppb] that does not cause the sensitive person to detect abnormality is preferably less than 1.0. The diffusive concentration [volume ppb] that urges the insensitive person to take evacuation action is preferably more than 40.

<VOLUME OF ROOM>

Next, the volume V of room LS, which is a variable of Formulae (1) and (2), will be described. The room LS to be applied to the air conditioner 1 is selected according to its rated cooling capacity. In other words, the volume V of the room LS varies based on the rated cooling capacity. The area of the rated cooling capacity of the air conditioner 1 depends on the heat load [W/m$^2$]. In Japan, where the heat load is large, HASS 109-1965 sets the heat load in the range of 145 W/m$^2$ to 220 W/m$^2$. In Europe, where cooling is often used, the heat load is generally in the range of 85 W/m$^2$ to 125 W/m$^2$ with 100 W/m$^2$ as the medium heat load, although there is a large difference depending on the region. The height of the room LS is generally 2.4 m.

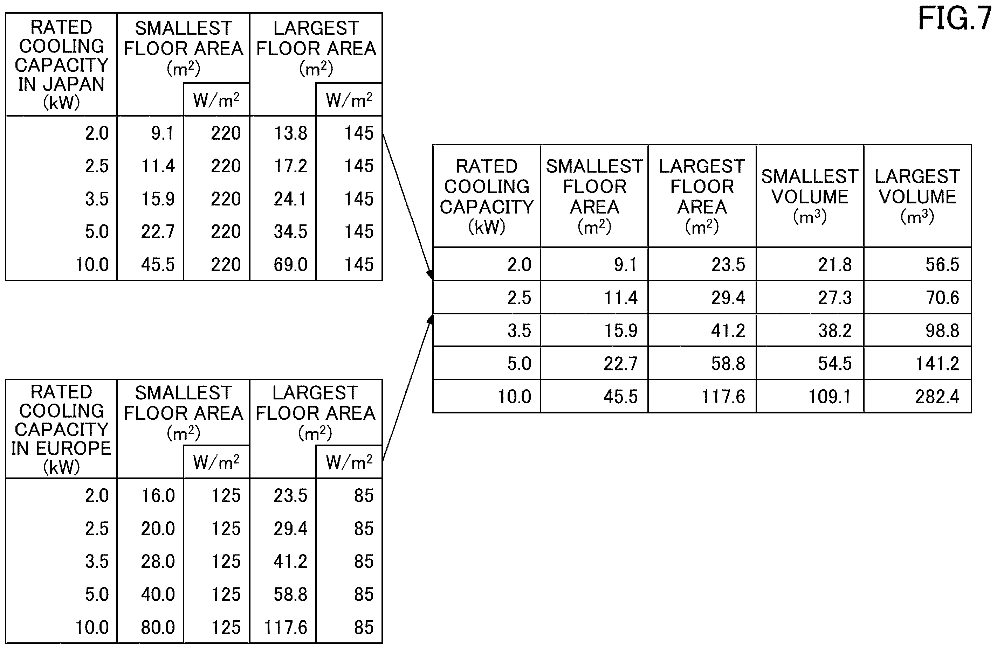

The relation between the heat load and the rated cooling capacity is summarized as shown in FIG. 7. The upper left table of FIG. 7 shows a relation between a rated cooling capacity and a range of area between the upper limit and the lower limit of room LS in Japan. Specifically, when the rated cooling capacity is 2.0 kW, the area of the room LS is in the range of 9.1 m$^2$ to 13.8 m$^2$. When the rated cooling capacity is 2.5 kW, the area of the room LS is in the range of 11.4 m$^2$ to 17.2 m$^2$. When the rated cooling capacity is 3.5 kW, the area of room LS is in the range of 15.9 m$^2$ to 24.1 m$^2$. When the rated cooling capacity is 5.0 kW, the area of LS in the living room is in the range of 22.7 m$^2$ to 34.5 m$^2$. When the rated cooling capacity is 10.0 kW, the area of the room LS is in the range of 45.5 m$^2$ to 69.0 m$^2$.

The lower left table of FIG. 7 shows a relation between a rated cooling capacity and a range of area between the upper limit and the lower limit of room LS in Europe. Specifically, when the rated cooling capacity is 2.0 kW, the area of LS in the living room is in the range of 16 m$^2$ to 23.5 m$^2$. When the rated cooling capacity is 2.5 kW, the area of LS in the living room is in the range of 20 m$^2$ to 29.4 m$^2$. When the rated cooling capacity is 3.5 kW, the area of LS in the living room is in the range of 28 m$^2$ to 41.2 m$^2$. When the rated cooling capacity is 5.0 kW, the area of LS in the living room is in the range of 40 m$^2$ to 58.8 m$^2$. When the rated cooling capacity is 10.0 kW, the area of the room LS is in the range of 80 m$^2$ to 117.6 m$^2$.

Based on the above, the floor area of the volume V of the room LS applied to Formulae (1) and (2) are recommended to be based on the floor area of Japan (smallest floor area) as the lower limit and the floor area of Europe (largest floor area) as the upper limit, as shown in the right table of FIG. 7. Then, by multiplying this floor area by the height of 2.4 m, the lower limit (smallest volume) and upper limit (largest volume) of the volume of the room LS can be calculated. Specifically, when the rated cooling capacity is 2.0 kW, the range of the smallest volume to the largest volume of the room LS is 21.8 m$^3$ to 56.5 m$^3$. When the rated cooling capacity is 2.5 kW, the range of the smallest volume to the largest volume of the room LS is 27.3 m$^3$ to 70.6 m$^3$. When the rated cooling capacity is 3.5 kW, the range of the smallest volume to the largest volume of the room LS is 38.2 m$^3$ to 98.8 m$^3$. When the rated cooling capacity is 5.0 kW, the range of the smallest volume to the largest volume of the room LS is 54.5 m$^3$ to 141.2 m$^3$. When the rated cooling capacity is 10.0 kW, the range of the smallest volume to the largest volume of the room LS is 109.1 m$^3$ to 282.4 m$^3$.

More specifically, when the rated cooling capacity of the air conditioner 1 is 2.0 kW or less, the volume V of the room LS is recommended to be 56.5 m$^3$ or less. By using the volume V of the room LS, it is possible to fill the air conditioner 1 whose rated cooling capacity is 2.0 kW or less with an appropriate fill amount of THT.

When the rated cooling capacity of the air conditioner 1 is more than 2.0 kW but less than 2.5 kW, the volume V of the room LS is preferably 21.8 m$^3$ to 70.6 m$^3$. By using the volume V of the room LS, it is possible to fill the air conditioner 1 whose rated cooling capacity is more than 2.0 kW but less than 2.5 kW with an appropriate fill amount of THT.

When the rated cooling capacity of the air conditioner 1 is more than 2.5 kW but less than 3.5 kW, the volume V of the room LS is preferably 27.3 m$^3$ to 98.8 m$^3$. By using the volume V of the room LS, it is possible to fill the air conditioner 1 whose rated cooling capacity is more than 2.5 kW but less than 3.5 kW with an appropriate fill amount of THT.

When the rated cooling capacity of the air conditioner 1 is more than 3.5 kW but less than 5.0 kW, the volume V of the room LS is preferably 38.2 m$^3$ to 141.2 m$^3$. By using the volume V of the room LS, it is possible to fill the air conditioner 1 whose rated cooling capacity is more than 3.5 kW but less than 5.0 kW with an appropriate fill amount of THT.

When the rated cooling capacity of the air conditioner 1 exceeds 5.0 kW, the volume V of the room LS is recommended to be 54.5 m$^3$ or more. By using the volume V of the room LS, the air conditioner 1 with the rated cooling capacity exceeding 5.0 kW can be filled with an appropriate fill amount of THT.

As described above, the volume V of the room LS of Formulae (1) and (2) can be set to the lower and upper limits corresponding to the rated cooling capacity of the model of the air conditioner 1. Therefore, the fill amount $M_{od}$ of THT, which can be calculated based on Formula (1) to prevent sensitive persons from detecting abnormality, can be calculated with the lower and upper limits corresponding to the ranges of the lower and upper limits. Similarly, the fill amount $M_{od}$ of THT, which can be calculated based on Formula (2) to urge insensitive persons to detect an abnormality, can be calculated with the lower and upper limits corresponding to the ranges of the lower and upper limits. Therefore, the fill amount $M_{od}$ of THT, which satisfies both Formulae (1) and (2), is in the range where the lower and upper limits of the fill amount $M_{od}$ of Formula (1) and the lower and upper limits of the fill amount $M_{od}$ of Formula (2) coincide.

When the air conditioner 1 is to be filled with refrigerant and THT at the time of installation, for example, it is preferable that the operator inputs various constants and variables to an arithmetic unit having Formulae (1) and (2), so that the arithmetic unit automatically calculates the fill amount $M_{od}$ of THT. Thus, the operator can appropriately adjust the fill amount $M_{od}$ of THT at the site where refrigerant and odor components are to be filled. Alternatively, if a layout where the air conditioner 1 is installed is recognized, the fill amount $M_{ref}$ of refrigerant, the fill amount $M_{oil}$ of refrigerating machine oil, the rated cooling capacity (volume V of the room LS), and the like can be obtained. Therefore, in the factory or the like of the air conditioner 1, the fill amount $M_{od}$ of THT can be calculated based on the obtained layout and Formulae (1) and (2), and THT (and refrigerant) can be pre-filled.

As described above, in the filling of THT to the refrigerant circuit 10, the appropriate fill amount $M_{od}$ can be obtained by applying Formula (1) or (2) and entering the values of each constant and each variable. Thus, the concentration of THT can be determined so that even a person who is sensitive to the odor of THT does not detect abnormality due to minor leakage, and the concentration of THT can be determined so that even a person who is insensitive to the odor of THT detects abnormality in the flammable range. Moreover, Formulae (1) and (2) include a term expressing the effect of dissolution of THT in the refrigerating machine oil. Therefore, as long as the fill amount of THT is calculated by Formulae (1) and (2), the function of THT can be stably ensured in the filled state of the air conditioner 1.

Further, the technology of the present disclosure is not limited to these embodiments, but various modifications may be made. For example, the refrigeration apparatus 1 is not limited to the air conditioner **1,** but can be applied to various devices having a refrigerant circuit 10 which is installed in the room LS and circulates refrigerant and THT. For example, as other examples of the refrigeration apparatus 1, it can be applied to cooling devices for cooling refrigeration apparatuses and freezers, chiller units, heat pump type water heaters, and the like.

In addition, the technology of the present disclosure is not limited to a configuration that satisfies both of above Formulae (1) and (2), but may satisfy only Formula (1) or only Formula (2). By obtaining a fill amount $M_{od}$ of THT that satisfies Formula (1), a sufficient effect that a sensitive person does not detect an abnormality when a small leak of refrigerant occurs can be obtained. Conversely, by obtaining a fill amount $M_{od}$ of THT that satisfies Formula (2), a sufficient effect that an insensitive person detects an abnormality when a leak of refrigerant occurs and urges an evacuation action can be obtained.

<MODE AND EFFECT OF THE PRESENT DISCLOSURE>

The above-disclosed embodiments have, for example, the following modes and effects.

[Clause 1]

A refrigeration apparatus (1) including a refrigerant circuit (10), wherein:

tetrahydrothiophene, as an odor component, is sealed in the refrigerant circuit (10) along with a refrigerant and a refrigerating machine oil, and
following Formula (1) is satisfied, where an amount of leakage of the refrigerant that leaks from the refrigerant circuit (10) at a leakage rate of 0.001 kg/h for four minutes is referred to as $M_{leak1}$ [kg], a fill amount of the odor component into the refrigerant circuit (10) is referred to as $M_{od}$ [kg], a fill amount of the refrigerating machine oil is referred to as $M_{oil}$ [kg], solubility of the odor component in the refrigerating machine oil is referred to as $S_{oil}$ [weight ppm], a fill amount of the refrigerant into the refrigerant circuit (10) is referred to as $M_{ref}$ [kg], a volume of a room (LS) is referred to as V [m³], and a density of the odor component is referred to as $\rho$ [kg/m³].

[Formula 1]

$$1 > \frac{M_{leak1} \times \left( (M_{od} - M_{oil} \times S_{oil})/M_{ref} \right)}{0.25 \times V \times \rho} \quad \cdots (1)$$

[Effect of Clause 1]

According to the above, the refrigeration apparatus can fill the refrigerant circuit with an appropriate amount of odor components by satisfying Formula (1). That is, the refrigeration apparatus can fill the refrigerant circuit with the appropriate fill amount of odor components that does not cause a person who is sensitive to the odor of tetrahydrothiophene, which is an odor component, to detect any abnormality even if a small leak occurs in the refrigerant circuit that is not a flammable range. This enables the refrigeration apparatus to optimize operation such as reducing a number of inquiries to a service company.

[Clause 2]

The refrigeration apparatus according to clause 1, wherein following Formula (2) is satisfied, where an amount of leakage of the refrigerant that leaks from the refrigerant circuit (10) at a leakage rate of 3 kg/h for four minutes is referred to as $M_{leak2}$ [kg], the fill amount of the odor component into the refrigerant circuit (10) is referred to as $M_{od}$ [kg], the fill amount of the refrigerating machine oil is referred to as $M_{oil}$ [kg], the solubility of the odor component in the refrigerating machine oil is referred to as $S_{oil}$ [weight ppm], the fill amount of the refrigerant into the refrigerant circuit (10) is referred to as $M_{ref}$ [kg], the volume of the room (LS) is referred to as V [m$^3$], and the density of the odor component is referred to as $\rho$ [kg/m$^3$].
[Formula 2]

$$40 \leqq \frac{M_{leak2} \times \left( (M_{od} - M_{oil} \times S_{oil})/M_{ref} \right)}{0.25 \times V \times \rho} \quad \cdots (2)$$

[Effect of Clause 2]

By satisfying Formula (2) in this way, the refrigerating apparatus can design a fill amount of the odor component that can cause even a person who is insensitive to the odor of tetrahydrothiophene to detect an abnormality when the refrigerant leaks in the refrigerant circuit in the flammable range.

[Clause 3]

The refrigeration apparatus according to clause 1 or 2, wherein the volume of the room (LS) is 56.5 m$^3$ or less when a rated cooling capacity is 2.0 kW or less.

[Effect of Clause 3]

Thus, the fill amount of the odor component can be appropriately designed in the refrigerating apparatus whose rated cooling capacity is 2.0 kW or less.

[Clause 4]

The refrigeration apparatus according to clause 1 or 2, wherein the volume of the room (LS) is 21.8 m$^3$ to 70.6 m$^3$ when a rated cooling capacity is more than 2.0 kW and 2.5 kW or less.

[Effect of Clause 4]

Thus, it is possible to appropriately design the fill amount of odor components in the refrigeration apparatus with the rated cooling capacity exceeding 2.0 kW and that is 2.5 kW or less.

[Clause 5]

The refrigeration apparatus according to clause 1 or 2, wherein the volume of the room (LS) is 27.3 m$^3$ to 98.8 m$^3$ when a rated cooling capacity is more than 2.5 kW and 3.5 kW or less.

[Effect of Clause 5]

Thus, it is possible to appropriately design the fill amount of odor components in the refrigeration apparatus with the rated cooling capacity exceeding 2.5 kW and that is 3.5 kW or less.

[Clause 6]

The refrigeration apparatus according to clause 1 or 2, wherein the volume of the room (LS) is $38.2\,m^3$ to $141.2\,m^3$ when a rated cooling capacity is more than 3.5 kW and 5.0 kW or less.

[Effect of Clause 6]

Thus, it is possible to appropriately design the fill amount of odor components in a refrigeration apparatus with a rated cooling capacity exceeding 3.5 kW but not exceeding 5.0 kW.

[Clause 7]

The refrigeration apparatus according to clause 1 or 2, wherein the volume V of the room (LS) is $54.5\,m^3$ or more when a rated cooling capacity is more than 5.0 kW.

[Effect of Clause 7]

Thus, it is possible to appropriately design the fill amount of odor components in a refrigeration apparatus with a rated cooling capacity exceeding 5.0 kW.

[Clause 8]

The refrigeration apparatus according to any one of clauses 1 to 7, wherein the refrigerant is a hydrocarbon refrigerant.

[Effect of Clause 8]

Thus, the refrigerant can optimize the fill amount of odor components in the refrigerant circuit with a hydrocarbon-based refrigerant.
The refrigeration apparatus 1 according to the embodiment disclosed herein is exemplary in all respects and not restrictive. The embodiments can be modified and improved in various forms without departing from the scope of the appended claims. The matters described in the above plurality of embodiments can have other configurations without contradiction, and can be combined without contradiction.

**Claims**

1. A refrigeration apparatus (1) comprising a refrigerant circuit (10), wherein:

   tetrahydrothiophene, as an odor component, is sealed in the refrigerant circuit (10) along with a refrigerant and a refrigerating machine oil, and
   following Formula (1) is satisfied, where an amount of leakage of the refrigerant that leaks from the refrigerant circuit (10) at a leakage rate of 0.001 kg/h for four minutes is referred to as $M_{leak1}$ [kg], a fill amount of the odor component into the refrigerant circuit (10) is referred to as $M_{od}$ [kg], a fill amount of the refrigerating machine oil is referred to as $M_{oil}$ [kg], solubility of the odor component in the refrigerating machine oil is referred to as $S_{oil}$ [weight ppm], a fill amount of the refrigerant into the refrigerant circuit (10) is referred to as $M_{ref}$ [kg], a volume of a room (LS) is referred to as V [$m^3$], and a density of the odor component is referred to as $\rho$ [kg/$m^3$].

$$1 > \frac{M_{leak1} \times \left( (M_{od} - M_{oil} \times S_{oil})/M_{ref} \right)}{0.25 \times V \times \rho} \quad \cdots (1)$$

2. The refrigeration apparatus according to claim 1, wherein following Formula (2) is satisfied, where an amount of leakage of the refrigerant that leaks from the refrigerant circuit (10) at a leakage rate of 3 kg/h for four minutes is referred to as $M_{leak2}$ [kg], the fill amount of the odor component into the refrigerant circuit (10) is referred to as $M_{od}$ [kg], the fill amount of the refrigerating machine oil is referred to as $M_{oil}$ [kg], the solubility of the odor component in the refrigerating machine oil is referred to as $S_{oil}$ [weight ppm], the fill amount of the refrigerant into the refrigerant circuit (10) is referred to as $M_{ref}$ [kg], the volume of the room (LS) is referred to as $V$ [m³], and the density of the odor component is referred to as $\rho$ [kg/m³].

$$40 \leqq \frac{M_{leak2} \times \left( (M_{od} - M_{oil} \times S_{oil})/M_{ref} \right)}{0.25 \times V \times \rho} \quad \cdots (2)$$

3. The refrigeration apparatus according to claim 1 or 2, wherein the volume of the room (LS) is 56.5 m³ or less when a rated cooling capacity is 2.0 kW or less.

4. The refrigeration apparatus according to claim 1 or 2, wherein the volume of the room (LS) is 21.8 m³ to 70.6 m³ when a rated cooling capacity is more than 2.0 kW and 2.5 kW or less.

5. The refrigeration apparatus according to claim 1 or 2, wherein the volume of the room (LS) is 27.3 m³ to 98.8 m³ when a rated cooling capacity is more than 2.5 kW and 3.5 kW or less.

6. The refrigeration apparatus according to claim 1 or 2, wherein the volume of the room (LS) is 38.2 m³ to 141.2 m³ when a rated cooling capacity is more than 3.5 kW and 5.0 kW or less.

7. The refrigeration apparatus according to claim 1 or 2, wherein the volume V of the room (LS) is 54.5 m³ or more when a rated cooling capacity is more than 5.0 kW.

8. The refrigeration apparatus according to claim 1 or 2, wherein the refrigerant is a hydrocarbon refrigerant.

## FIG.1

EP 4 717 747 A1

# FIG.2A

| Indication method of odor intensity | |
|---|---|
| Odor intensity | Rating word |
| 0 | None |
| 1 | Threshold |
| 2 | Moderate |
| 3 | Strong |
| 4 | Very strong |
| 5 | Excessively strong |

# FIG.2B

Choices of Questionnaire

e. I detect an emergency.
   I want to run away at once.

d. The odor is strong and I want to leave the room, but I can tolerate it for a short time, and I do not detect urgency.

c. I detect a distinct odor and want to seek the cause of the abnormality.

b. There is an odor, but it is a kind of household odor and I do not detect abnormality.

a. There is an odor but hardly sensed.

# FIG.3

50

51

51s

52

51b

54

56

55

51a

53

# FIG.4A

THT ODOR INTENSITY vs. PERCEPTION

# FIG.4B

THT DIFFUSIVE CONCENTRATION vs. ODOR INTENSITY

# FIG.5A

ODOR INTENSITY AT
WHICH INSENSITIVE PEOPLE DETECT ABNORMALITY

|  | ODOR INTENSITY | DIFFUSIVE CONCENTRATION (VOLUME ppb) |
|---|---|---|
| MEDIAN OF +3 $\sigma$ OR LESS (99.85% OF JUDGES CHOOSE d OR e) | ≤ 4.8 | ≤ 170 |
| MEDIAN OF +2 $\sigma$ OR LESS (97.7% OF JUDGES CHOOSE d OR e) | ≤ 4.5 | ≤ 82 |
| MEDIAN OF +1 $\sigma$ OR LESS (84.1% OF JUDGES CHOOSE d OR e) | ≤ 4.2 | ≤ 40 |

# FIG.5B

ODOR INTENSITY AT
WHICH SENSITIVE PEOPLE DETECT ABNORMALITY

|  | ODOR INTENSITY | DIFFUSIVE CONCENTRATION (VOLUME ppb) |
|---|---|---|
| MEDIAN OF −3 $\sigma$ OR LESS (0.15% OF JUDGES CHOOSE c OR d OR e) | ≤ 1.5 | ≤ APPROXIMATELY 0.02 |
| MEDIAN OF −2 $\sigma$ OR LESS (2.3% OF JUDGES CHOOSE c OR d OR e) | ≤ 2.0 | ≤ 0.17 |
| MEDIAN OF −1 $\sigma$ OR LESS (15.9% OF JUDGES CHOOSE c OR d OR e) | ≤ 2.5 | ≤ 1.0 |

# FIG.6

1(30)　　　　　　　　　　　　　　　　　　　　　LS

THT CONCENTRATION

LOW　　　　　　　　　　　　　　　　　　　HIGH

FIG.7

| RATED COOLING CAPACITY IN JAPAN (kW) | SMALLEST FLOOR AREA (m²) | W/m² | LARGEST FLOOR AREA (m²) | W/m² |
|---|---|---|---|---|
| 2.0 | 9.1 | 220 | 13.8 | 145 |
| 2.5 | 11.4 | 220 | 17.2 | 145 |
| 3.5 | 15.9 | 220 | 24.1 | 145 |
| 5.0 | 22.7 | 220 | 34.5 | 145 |
| 10.0 | 45.5 | 220 | 69.0 | 145 |

| RATED COOLING CAPACITY (kW) | SMALLEST FLOOR AREA (m²) | LARGEST FLOOR AREA (m²) | SMALLEST VOLUME (m³) | LARGEST VOLUME (m³) |
|---|---|---|---|---|
| 2.0 | 9.1 | 23.5 | 21.8 | 56.5 |
| 2.5 | 11.4 | 29.4 | 27.3 | 70.6 |
| 3.5 | 15.9 | 41.2 | 38.2 | 98.8 |
| 5.0 | 22.7 | 58.8 | 54.5 | 141.2 |
| 10.0 | 45.5 | 117.6 | 109.1 | 282.4 |

| RATED COOLING CAPACITY IN EUROPE (kW) | SMALLEST FLOOR AREA (m²) | W/m² | LARGEST FLOOR AREA (m²) | W/m² |
|---|---|---|---|---|
| 2.0 | 16.0 | 125 | 23.5 | 85 |
| 2.5 | 20.0 | 125 | 29.4 | 85 |
| 3.5 | 28.0 | 125 | 41.2 | 85 |
| 5.0 | 40.0 | 125 | 58.8 | 85 |
| 10.0 | 80.0 | 125 | 117.6 | 85 |

# EP 4 717 747 A1

**Europäisches Patentamt**
**European Patent Office**
**Office européen des brevets**

## EUROPEAN SEARCH REPORT

**Application Number**

EP 25 16 3183

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 386 279 A1 (MITSUBISHI ELECTRIC CORP [JP]) 19 June 2024 (2024-06-19) * paragraphs [0013] - [0014], [0035] - [0037], [0106] - [0115], [0128]; figure 1; table 5 * | 1-8 | INV. C09K5/04 F25B9/00 |

-----

**TECHNICAL FIELDS SEARCHED (IPC)**

C09K
F25B

The present search report has been drawn up for all claims

| Place of search | Date of completion of the search | Examiner |
|---|---|---|
| The Hague | 28 July 2025 | Martinez Marcos, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 3183

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2025

| Patent document cited in search report | | | Publication date | Patent family member(s) | | | Publication date |
|---|---|---|---|---|---|---|---|
| EP 4386279 | A1 | | 19-06-2024 | CN | 118202204 | A | 14-06-2024 |
| | | | | CN | 119592362 | A | 11-03-2025 |
| | | | | EP | 4386279 | A1 | 19-06-2024 |
| | | | | EP | 4574936 | A2 | 25-06-2025 |
| | | | | JP | 7250229 | B1 | 31-03-2023 |
| | | | | JP | WO2023079817 | A1 | 11-05-2023 |
| | | | | US | 2024425773 | A1 | 26-12-2024 |
| | | | | US | 2025122442 | A1 | 17-04-2025 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 7162786 A